# EUROPEAN PATENT APPLICATION

(11) **EP 4 786 412 A1**
(43) Date of publication of application: **05.08.2026**
(21) Application number: 24882351.0
(22) Date of filing: 21.10.2024
(51) Int. Cl.: C01B 3/02, B01J 27/053, B01J 27/128, B01J 27/25, B01J 31/20, B01J 31/22, C01B 3/22

(54) **METHOD FOR PRODUCING HYDROGEN GAS**

(30) Priority: 23.10.2023 JP 2023181619
(71) Applicant: Kyushu University, National University Corporation, Nishi-ku Fukuoka-shi Fukuoka 819-0395 (JP)
(72) Inventor: MATSUMOTO, Takahiro, Fukuoka-shi, Fukuoka 819-0395 (JP); SAKURAI, Masaya, Fukuoka-shi, Fukuoka 819-0395 (JP); KAWASAKI, Yudai, Fukuoka-shi, Fukuoka 819-0395 (JP); TANAKA, Ryonosuke, Fukuoka-shi, Fukuoka 819-0395 (JP)
(74) Representative: J A Kemp LLP
(86) International application number: PCT/JP2024/037444
(87) International publication number: WO 2025/089238

(57) **Abstract**

A method for producing hydrogen gas includes a step of obtaining hydrogen gas by irradiating, with light, a mixture comprising a catalyst containing a base metal component, and a substrate containing at least one selected from the group consisting of chitin, cellulose, hemicellulose, lignin, glucose, cellobiose, starch, and an alcohol.

## Description

### Technical Field

The present disclosure relates to a method for producing hydrogen gas.

### Background Art

In order to realize a carbon-neutral society, methods for obtaining hydrogen from renewable biomass resources and alcohols have been studied. Non-Patent Literature 1 describes a method for generating hydrogen gas from methanol under heating and reflux using an iridium complex. Non-Patent Literature 2 describes a method for generating hydrogen gas from cellulose at 135°C using an iridium complex.

### Citation List

### Non Patent Literature

[Non-Patent Literature 1] K. Fujita, etc., Hydrogen Production from a Methanol-Water Solution Catalyzed by an Anionic Iridium Complex Bearinga Functional Bipyridonate Ligand under Weakly Basic Conditions, Angew. Chem. Int. Ed., 2015, 54, pp. 9057-9060
[Non-Patent Literature 2] G. Toyooka, etc., Hydrogen production from cellulose catalyzed by an iridium complex in ionic liquid under mild conditions, Catal. Sci. Technol., 2021, 11, pp 2273-2279

### Summary of Invention

### Technical Problem

Conventionally, catalysts containing noble metal components such as iridium have been used as catalysts for reactions that generate hydrogen gas from biomass resources and alcohols. However, since noble metals are expensive, it is difficult to obtain them in large quantities. In addition, reactions using conventional catalysts containing noble metal components need to be carried out at high temperatures, which also imposes a large environmental burden. The present disclosure provides a method for producing hydrogen gas that enables hydrogen gas to be obtained from readily available raw materials by a mild and simple process while using a catalyst containing a base metal component.

### Solution to Problem

One aspect of the present disclosure provides a method for producing hydrogen gas, the method comprising a step of obtaining hydrogen gas by irradiating, with light, a mixture comprising a catalyst containing a base metal component, and a substrate containing at least one selected from the group consisting of chitin, cellulose, hemicellulose, lignin, glucose, cellobiose, starch, and an alcohol.

The method for producing hydrogen gas can obtain hydrogen gas from a substrate containing at least one selected from the group consisting of chitin, cellulose, hemicellulose, lignin, glucose, cellobiose, starch, and an alcohol by using a catalyst containing a base metal component and light as an energy source. By using such a method for producing hydrogen gas, hydrogen gas can be obtained by a mild and simple process.

### Advantageous Effects of Invention

The present disclosure provides a method for producing hydrogen gas that enables hydrogen gas to be generated from readily available raw materials by a mild and simple process using a catalyst containing a base metal component.

### Brief Description of Drawings

[FIG. 1] FIG. 1 is a diagram illustrating a reaction for generating hydrogen gas from methanol using a metal ion as a catalyst.
[FIG. 2] FIG. 2 is a diagram illustrating a reaction for generating hydrogen gas from a compound having a hydroxy group using a manganese complex as a catalyst.
[FIG. 3] FIG. 3 is a diagram illustrating a reaction for generating hydrogen gas from a compound having a hydroxy group using an iron complex as a catalyst.
[FIG. 4] FIG. 4 is a diagram showing detection of formaldehyde in a solution after the reaction in Example 5.

### Description of Embodiments

Hereinafter, embodiments of the present disclosure will be described. However, the following embodiments are examples for explaining the present disclosure, and are not intended to limit the present disclosure to the following contents. The upper or lower limit values of the numerical ranges specified in the present disclosure may be replaced with any of the values shown in the examples. A numerical range exemplified by "a to b" has a lower limit of a and an upper limit of b, and the numerical range includes a and b. The upper and lower limit values described individually may be combined arbitrarily. Unless otherwise specified, the materials or components exemplified in the present disclosure may be used alone or in a combination of two or more. In the description, the same reference numerals are given to identical elements or elements having identical functions, and redundant description is omitted.

A method for producing hydrogen gas according to one embodiment comprises a step of obtaining hydrogen gas by irradiating, with light, a mixture comprising a catalyst containing a base metal component, and a substrate containing at least one selected from the group consisting of chitin, cellulose, hemicellulose, lignin, glucose, cellobiose, starch, and an alcohol. By including such a step, hydrogen gas can be generated without using high energy such as high temperature or expensive noble metal catalysts. Therefore, hydrogen gas can be obtained from readily available raw materials by a mild and simple process.

Chitin, cellulose, hemicellulose, starch, and lignin are polysaccharides or polymers, and may be contained in biomass resources. Therefore, these are readily available like alcohols. Examples of biomass resources include woody biomass, marine biomass, and insect biomass. Examples of woody biomass include plants such as the genera Cryptomeria, Chamaecyparis, Pinus, Larix, Abies, and Eucalyptus. Examples of marine biomass include shells of crustaceans such as snow crab shells and red king crab shells. Examples of insect biomass include insect exoskeletons.

Glucose is a monosaccharide and may be contained in the above-described biomass resources. Cellobiose is a disaccharide and may be contained in the above-described biomass resources. Glucose and cellobiose may be decomposition products obtained by decomposition of the above-described polysaccharides or polymers. The above-described biomass resources may contain monosaccharides or disaccharides other than glucose and cellobiose.

The lignin may be kraft lignin. Kraft lignin may be dried black liquor removed during production of pulp from wood. From the viewpoint of promoting the reaction, the lignin may include kraft lignin.

The alcohol may be linear, may have a branched chain, or may have a ring. Examples of linear alcohols include methanol, ethanol, and propanol (1-propanol). Examples of alcohols having a branched chain include isopropanol (2-propanol), 2-methylpropyl alcohol, and 2-methyl-2-propanol. Examples of alcohols having a ring include cyclohexanol, cyclohexanemethanol, and cyclohexaneethanol. The alcohol may also be a polyhydric alcohol such as ethylene glycol, propylene glycol, or butanediol.

As the substrate, at least one polysaccharide or polymer selected from the group consisting of chitin, cellulose, hemicellulose, and lignin may be used as it is, or the biomass resource containing the polysaccharide or polymer may be used as it is. As the substrate, glucose, which is a monosaccharide, or cellobiose, which is a disaccharide, may be used as it is, or the biomass resource containing the monosaccharide or the disaccharide may be used as it is. One or more of the above-described biomass resources, monosaccharides, disaccharides, polysaccharides, and polymers may be used in combination. When an alcohol is used as the substrate, the above-described alcohol may be used as it is, or may be mixed with the biomass resource, monosaccharide, disaccharide, polysaccharide, or polymer. One or more of the above-described alcohols may be used in combination.

The catalyst contains a base metal component. Base metals are metals that are not noble metals, and examples thereof include iron, manganese, nickel, copper, and zinc. Base metals are easier to obtain and less expensive than noble metals. The catalyst containing a base metal component may be a catalyst having a base metal as a constituent element. Examples of catalysts containing a base metal component include ionic metal compounds having base metal ions and complex compounds having base metal complexes. Hereinafter, a catalyst containing divalent or trivalent base metal ions is referred to as a "first catalyst", a catalyst containing a manganese complex is referred to as a "second catalyst", and a catalyst containing an iron complex is referred to as a "third catalyst".

The catalyst containing a base metal component can be used as a catalyst for producing hydrogen gas. Therefore, the above-described first catalyst, second catalyst, and third catalyst can be used as catalysts for producing hydrogen gas.

### <First Catalyst and Reaction Conditions>

In the first catalyst, the base metal component includes at least one selected from the group consisting of divalent and trivalent metal ions. That is, the first catalyst contains divalent or trivalent base metal ions. Such base metal ions can be obtained by dissolving a metal compound or a hydrate thereof in alcohol, water, or the like. Examples of the metal compound include iron compounds, copper compounds, nickel compounds, zinc compounds, and manganese compounds. Examples of iron compounds include Fe^{III}Cl₃, Fe^{II}Cl₂, Fe^{III}(NO₃)₃, Fe^{II}(NO₃)₂, Fe^{III}₂(SO₄)₃, and Fe^{II}(SO₄). Examples of copper compounds include Cu^{II}Cl₂ and Cu^{II}SO₄. Examples of nickel compounds include Ni^{II}Cl₂. Examples of zinc compounds include Zn^{II}Cl₂. Examples of manganese compounds include Mn^{II}Cl₂ and Mn^{II}(NO₃)₂.

Examples of hydrates of metal compounds include Fe^{III}Cl₃·6H₂O, Fe^{II}Cl₂·4H₂O, Fe^{III}(NO₃)₃·9H₂O, Fe^{II}(NO₃)₂·6H₂O, Fe^{III}₂(SO₄)₃·nH₂O, Fe^{II}(SO₄)·nH₂O, Cu^{II}Cl₂·2H₂O, Cu^{II}SO₄·5H₂O, Ni^{II}Cl₂·6H₂O, Zn^{II}Cl₂·6H₂O, Mn^{II}Cl₂·4H₂O, Mn^{II}Cl₂·6H₂O, and Mn^{II}(NO₃)₂·nH₂O. The above-described catalysts containing metal ions are readily available because they contain base metal components. In addition, catalysts containing metal ions can further promote the generation of hydrogen gas when alcohol is used as the substrate. From the viewpoint of further improving reactivity with an alcohol and improving the amount of hydrogen gas generated, it is preferable that the metal ion includes a divalent and/or trivalent iron ion. From the viewpoint of further improving the amount of hydrogen gas generated, it is more preferable that the catalyst includes a divalent and/or trivalent iron chloride. The catalyst containing divalent or trivalent base metal ions can be used as a catalyst for producing hydrogen gas.

In the step of obtaining hydrogen gas, a mixture may be prepared by mixing a catalyst containing divalent or trivalent metal ions and a substrate containing at least one selected from the group consisting of chitin, cellulose, hemicellulose, glucose, cellobiose, starch, and lignin, which are examples of monosaccharides, disaccharides, polysaccharides, polymers, or biomass resources. The catalyst in the mixture may be contained in a proportion of 0.001 to 30 µmol, 0.025 to 2.5 µmol, 0.25 to 1.25 µmol, or 0.5 to 1.0 µmol per 100 mg of the substrate. When the content of the catalyst is within the above range, the reaction can be further promoted. As the solvent, polar solvents such as water, acetonitrile, propionitrile, ethyl acetate, dimethylformamide, dimethyl sulfoxide, and anisole can be used.

In the step of obtaining hydrogen gas, a mixture may be prepared by mixing a catalyst containing divalent or trivalent metal ions and a substrate containing an alcohol. In this case, the catalyst in the mixture may be contained in a proportion of 0.01 to 2.0 µmol, 0.01 to 1.0 µmol, 0.1 to 0.5 µmol, or 0.2 to 0.4 µmol per 1.5 mL of the alcohol as the substrate. When the content of the catalyst is within the above range, the reaction can be further promoted. When an alcohol is used as the substrate, since the alcohol is liquid, it is not necessary to use a solvent for mixing with the catalyst. When an alcohol is used as the substrate, water may be used as the solvent.

In order to promote the reaction, the mixture may contain a base. The base can promote the elimination of a hydrogen atom from a hydroxy group in the substrate coordinated to the catalyst. The base may be an inorganic base or an organic base. The inorganic base may be, for example, sodium hydroxide, potassium hydroxide, lithium hydroxide, or the like. The organic base may be, for example, triethylamine, diazabicycloundecene, 1,8-bis(dimethylamino)naphthalene, pyridine, or the like. The concentration of the base in the mixture may be 10 mM or more, 50 mM or more, or 90 mM or more with respect to the total amount of the mixture after addition of the base. When the concentration of the base is within this range, the reaction can be further promoted. The concentration of the base may be 1000 mM or less, 500 mM or less, 250 mM or less, or 100 mM or less with respect to the total amount of the mixture after addition of the base. When the concentration of the base is within this range, excellent handleability is achieved. An example of the concentration of the base may be 10 to 1000 mM.

Hydrogen gas can be obtained by irradiating the obtained mixture with light. The light may be visible light or ultraviolet light. The light may be, for example, sunlight. From the viewpoint of further promoting the reaction, it is preferable to use ultraviolet light. The ultraviolet light may include a wavelength range of 250 to 385 nm, 275 to 385 nm, or 275 to 350 nm. The light intensity of the ultraviolet light may be 1 to 1000 mW, 3 to 100 mW, 5 to 25 mW, or 7 to 20 mW. Such ultraviolet light can be easily irradiated and is highly safe because of its low intensity. Such ultraviolet light can be irradiated using, for example, a 300 W xenon light source "MAX-303" (product name) manufactured by Asahi Spectra Co., Ltd.

When visible light is irradiated, the visible light may include a wavelength range of 385 to 780 nm, 385 to 740 nm, 400 to 700 nm, or 450 to 600 nm. The light intensity of the visible light may be 0.01 to 500 W, 0.05 to 100 W, 0.1 to 10 W, 0.15 to 1 W, 200 to 750 mW, or 250 to 500 mW. Such visible light can be easily irradiated and is highly safe. Such visible light can be irradiated using, for example, a 300 W xenon light source "MAX-303" (product name) manufactured by Asahi Spectra Co., Ltd. Sunlight may be light including both the above-described ultraviolet light and visible light wavelengths.

The irradiation of light may be performed at room temperature, or may be performed while heating the mixture. The temperature of the mixture during light irradiation may be, for example, 15 to 80°C or 20 to 60°C. When the temperature of the mixture during light irradiation is within the above range, hydrogen gas can be obtained from the substrate by a milder and simpler process. In addition, the reaction can be promoted by heating the mixture.

Before irradiating the mixture with light, a pretreatment step of heating the mixture may be performed. The heating temperature in the pretreatment step may be, for example, 120 to 200°C, 130 to 180°C, or 140 to 170°C. The heating time may be 2 to 6 hours or 3 to 5 hours. By performing the pretreatment step, the reaction in which hydrogen gas is generated can be promoted.

The irradiation of light may be performed in a nitrogen atmosphere with a nitrogen purity of 99% by volume or more, or may be performed in an air atmosphere. By performing the reaction in an air atmosphere, the reaction can be further promoted and the reaction can be performed more simply. In order to create a nitrogen atmosphere, for example, Schlenk line technology, a glove box, or the like can be used. By performing the reaction in a nitrogen atmosphere, the reaction can be performed even when the catalyst contains a metal complex.

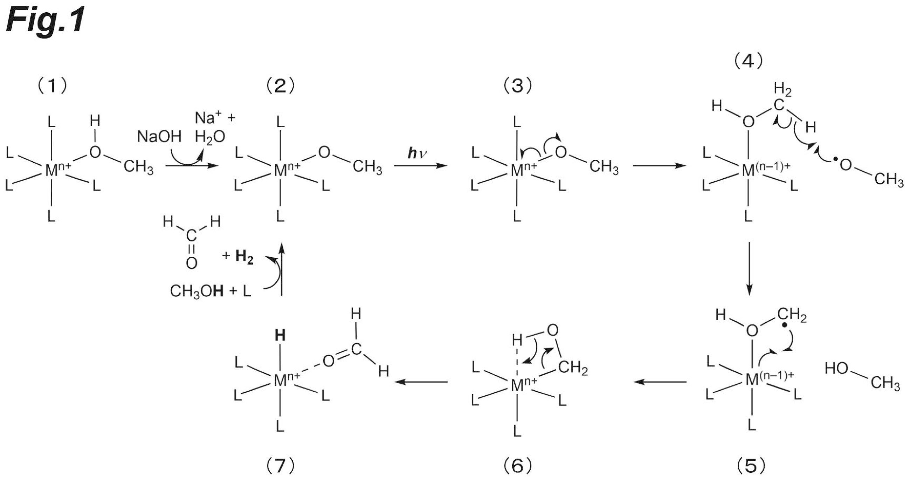

The mechanism of the reaction for generating hydrogen gas from methanol using a metal ion as a catalyst is presumed as shown in FIG. 1. (1) in FIG. 1 shows a metal ion Mⁿ⁺ to which an oxygen atom of methanol is coordinated. For simplicity, coordinated methanol not related to the reaction is represented by L. From the compound of (1), the proton of the hydroxy group in methanol is eliminated by the base added to the mixture, and the compound of (2) is obtained. By applying light energy to the compound of (2), as shown in (3), the coordination between the metal ion and oxygen is broken, and a radicalized methoxy group is obtained. As shown in (4), the radicalized methoxy group reacts with the C-H bond of another methanol coordinated to the metal ion to abstract a hydrogen atom, and returns to methanol. As a result, a compound having a radicalized carbon as shown in (5) is obtained.

The radicalized carbon shown in (5) bonds with the metal ion to temporarily form a cyclic structure as shown in (6). Thereafter, as the reaction proceeds, a hydride and formaldehyde coordinate to the metal ion as shown in (7). When formaldehyde is eliminated from the metal ion, methanol coordinates to the metal ion again. At that time, the hydride coordinated to the metal ion and the proton of the hydroxy group bond to generate hydrogen gas. In this way, hydrogen gas can be produced. Thereafter, since the reaction returns to the state of (2), the catalyst can be reused and the reaction can be repeated. Since the reaction after (2) uses only light energy as the energy applied from the outside, by using such a catalyst, hydrogen gas can be produced by a milder and simpler process. When the substrate is a monosaccharide, disaccharide, polysaccharide, or polymer derived from a biomass resource, the reaction proceeds in the same manner using the hydroxy group in the monosaccharide, disaccharide, polysaccharide, or polymer. The mechanism by which hydrogen gas is generated is not limited to the above. In addition, gases other than hydrogen gas may be generated. Examples of gases other than hydrogen gas include methane and ethane, or the like.

### <Second Catalyst and Reaction Conditions>

The second catalyst contains a manganese complex. Hydrogen gas can be obtained by irradiating, with light, a mixture of a manganese complex as a catalyst and a substrate. When the catalyst is a manganese complex, the reactivity with chitin is even higher. Regarding the step of obtaining hydrogen gas, the description regarding the reaction temperature for the first catalyst can be applied as it is. In addition, before irradiating the mixture with light, the pretreatment step described for the first catalyst may be performed.

The manganese complex may be solid or liquid. Because the complex is liquid, it requires no solvent, and thus the handleability is superior to that of a solid catalyst, and the reactivity is further improved. As the manganese complex, for example, at least one complex selected from the group consisting of the complexes of the following formulas (a) and (b) can be used. The manganese complex of formula (a) is liquid, and the manganese complex of formula (b) is solid. Such manganese complexes may be commercially available. In addition, catalysts containing the manganese complexes of the following formulas (a) and (b) can be used as catalysts for producing hydrogen gas.

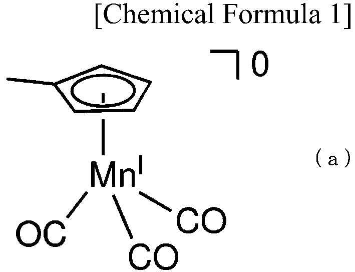

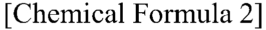

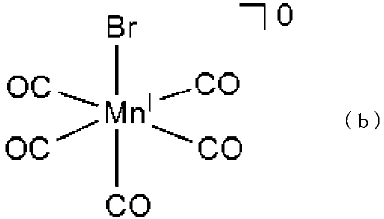

When the catalyst contains a manganese complex, the content of the catalyst in the mixture containing the substrate and the catalyst may be 40 to 600 µmol, 80 to 300 µmol, or 120 to 200 µmol per 1.0 mmol of the substrate. When the content of the catalyst is within the above range, the reactivity is further improved. When the substrate is a polysaccharide or polymer, the amount of substance of the substrate can be calculated by converting it to its constituent monomer. For example, the amount of substance of 101 mg of chitin can be calculated as 0.101 g/203.2 g/mol ≈ 0.5 mmol by converting it to N-acetyl-D-glucosamine (molecular weight: 203.2 g/mol), which is a monomer of chitin.

Hydrogen gas can be obtained by irradiating, with light, a mixture containing a manganese complex as a catalyst and a substrate. The light may be visible light or ultraviolet light. The light may be, for example, sunlight. The ultraviolet light may include a wavelength range of 250 to 385 nm or 275 to 350 nm. The ultraviolet light may include, for example, a wavelength range of 300 to 385 nm. The light intensity of the ultraviolet light may be 1 to 1000 mW, 10 to 500 mW, 20 to 100 mW, or 25 to 80 mW. Such ultraviolet light can be easily irradiated and is highly safe. Such ultraviolet light can be irradiated using, for example, a 300 W xenon light source "MAX-303" (product name) manufactured by Asahi Spectra Co., Ltd.

The visible light may include a wavelength range of 385 to 780 nm, 385 to 740 nm, 400 to 700 nm, or 450 to 600 nm. The light intensity of the visible light may be 0.01 to 500 W, 0.05 to 100 W, 0.1 to 10 W, 0.15 to 1 W, or 250 to 500 mW. Such visible light can be easily irradiated and is highly safe. Such visible light can be irradiated using, for example, a 300 W xenon light source "MAX-303" (product name) manufactured by Asahi Spectra Co., Ltd. Sunlight may be light including both the above-described ultraviolet light and visible light wavelengths.

The irradiation of light may be performed in a nitrogen atmosphere with a nitrogen purity of 99% by volume or more, or may be performed in an air atmosphere. In order to create a nitrogen atmosphere, for example, Schlenk line technology, a glove box, or the like can be used. By performing the reaction in a nitrogen atmosphere, the reaction can be performed even when the catalyst contains a metal complex. By performing the reaction in an air atmosphere, the reaction can be performed more simply.

In order to promote the reaction, the mixture may contain a base. The base can promote the elimination of a hydrogen atom from a hydroxy group in the substrate coordinated to the catalyst. The base may be an inorganic base or an organic base. The inorganic base may be, for example, sodium hydroxide, potassium hydroxide, lithium hydroxide, or the like. The organic base may be, for example, triethylamine, diazabicycloundecene, 1,8-bis(dimethylamino)naphthalene, pyridine, or the like. The concentration of the base in the mixture may be 10 mM or more, 50 mM or more, or 90 mM or more with respect to the total amount of the mixture after addition of the base. When the concentration of the base is within this range, the reaction can be further promoted. The concentration of the base may be 1000 mM or less, 500 mM or less, 250 mM or less, or 100 mM or less with respect to the total amount of the mixture after addition of the base. When the concentration of the base is within this range, excellent handleability is achieved. An example of the concentration of the base may be 10 to 1000 mM.

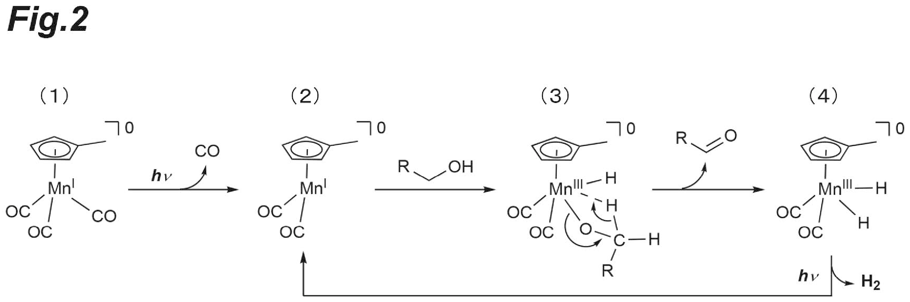

The mechanism of the reaction for generating hydrogen gas from a compound having a hydroxy group using the manganese complex of formula (a) as a catalyst is presumed as shown in FIG. 2. When the manganese complex of (1) in FIG. 2 is irradiated with light, CO coordinated to the manganese complex is eliminated by light energy to generate (2), and a hydroxy group then coordinates to the resulting vacant site to form a cyclic structure as shown in (3). Thereafter, the reaction proceeds within the cyclic structure, and a manganese complex to which a hydride is coordinated is obtained as shown in (4). The hydride coordinated to the manganese complex is eliminated as hydrogen gas by light energy, and the manganese complex returns to (2). In this way, hydrogen gas can be obtained. Since the reaction returns to (2), the manganese complex used can be reused as a catalyst and the reaction can be repeated. Therefore, hydrogen can be produced by a milder and simpler process. The mechanism by which hydrogen gas is generated is not limited to the above. In addition, gases other than hydrogen gas may be generated. Examples of gases other than hydrogen gas include methane and ethane, or the like.

### <Third Catalyst and Reaction Conditions>

The third catalyst contains an iron complex. Hydrogen gas can be obtained by irradiating, with light, a mixture containing an iron complex as a catalyst and a substrate. Regarding the step of obtaining hydrogen gas, the description regarding the reaction temperature for the first catalyst can be applied as it is. In addition, before irradiating the mixture with light, the pretreatment step described for the first catalyst may be performed. As the iron complex, for example, the one shown in the following formula (c) can be used. The catalyst shown in formula (c) may be commercially available. In addition, a catalyst containing the iron complex of the following formula (c) can be used as a catalyst for producing hydrogen gas.

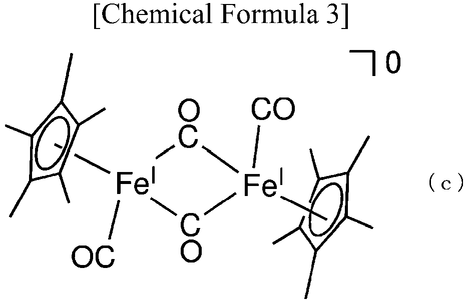

When the catalyst contains an iron complex, a mixture may be prepared by mixing the catalyst and a substrate containing at least one selected from the group consisting of chitin, cellulose, hemicellulose, glucose, cellobiose, starch, and lignin, which are examples of monosaccharides, disaccharides, polysaccharides, polymers, or biomass resources. The catalyst in the mixture may be contained in a proportion of 0.025 to 2.5 µmol, 0.25 to 1.25 µmol, or 0.5 to 1.0 µmol per 100 mg of the substrate. When the content of the catalyst is within the above range, the reaction can be further promoted. As the solvent, polar solvents such as acetonitrile, propionitrile, ethyl acetate, dimethylformamide, dimethyl sulfoxide, and anisole can be used.

A mixture may be prepared by mixing a catalyst containing an iron complex and a substrate containing an alcohol. In this case, the catalyst in the mixture may be contained in a proportion of 0.001 to 0.5 µmol, 0.01 to 0.2 µmol, or 0.03 to 0.1 µmol per 1.5 mL of the alcohol as the substrate. When the content of the catalyst is within the above range, the reaction can be further promoted.

Hydrogen gas can be obtained by irradiating, with light, a mixture in which an iron complex as a catalyst and a substrate are mixed. The light may be visible light or ultraviolet light. The light may be, for example, sunlight. The ultraviolet light may include a wavelength range of 250 to 385 nm or 275 to 350 nm. The ultraviolet light may include, for example, a wavelength range of 300 to 385 nm. The light intensity of the ultraviolet light may be 1 to 1000 mW, 10 to 500 mW, 20 to 100 mW, or 25 to 80 mW. Such ultraviolet light can be easily irradiated and is highly safe. Such ultraviolet light can be irradiated using, for example, a 300 W xenon light source "MAX-303" (product name) manufactured by Asahi Spectra Co., Ltd.

The visible light may include a wavelength range of 385 to 780 nm, 385 to 740 nm, 400 to 700 nm, or 450 to 600 nm. The light intensity of the visible light may be 0.01 to 500 W, 0.05 to 100 W, 0.1 to 10 W, 0.15 to 1 W, or 250 to 500 mW. Such visible light can be easily irradiated and is highly safe. Such visible light can be irradiated using, for example, a 300 W xenon light source "MAX-303" (product name) manufactured by Asahi Spectra Co., Ltd. Sunlight may be light including both the above-described ultraviolet light and visible light wavelengths.

The irradiation of light may be performed in a nitrogen atmosphere with a nitrogen purity of 99% by volume or more, or may be performed in an air atmosphere. In order to create a nitrogen atmosphere, for example, Schlenk line technology, a glove box, or the like can be used. By performing the reaction in a nitrogen atmosphere, the reaction can be performed even when the catalyst contains a metal complex. By performing the reaction in an air atmosphere, the reaction can be performed more simply.

In order to promote the reaction, the mixture may contain a base. The base can promote the elimination of a hydrogen atom from a hydroxy group in the substrate coordinated to the catalyst. The base may be an inorganic base or an organic base. The inorganic base may be, for example, sodium hydroxide, potassium hydroxide, lithium hydroxide, or the like. The organic base may be, for example, triethylamine, diazabicycloundecene, 1,8-bis(dimethylamino)naphthalene, pyridine, or the like. The concentration of the base in the mixture may be 10 mM or more, 50 mM or more, or 90 mM or more with respect to the total amount of the mixture after addition of the base. When the concentration of the base is within this range, the reaction can be further promoted. The concentration of the base may be 1000 mM or less, 500 mM or less, 250 mM or less, or 100 mM or less with respect to the total amount of the mixture after addition of the base. When the concentration of the base is within this range, excellent handleability is achieved. An example of the concentration of the base may be 10 to 1000 mM.

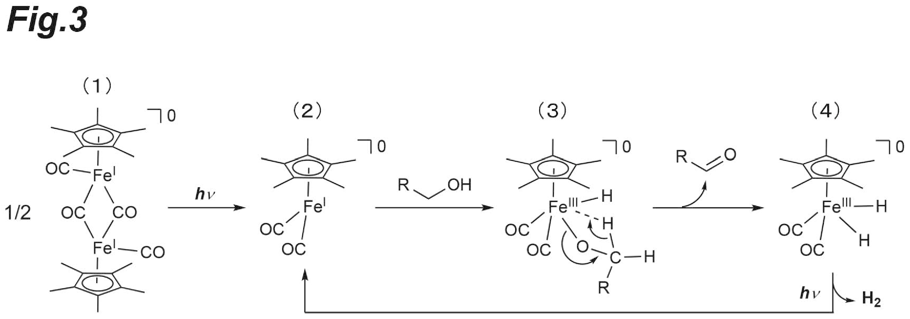

The mechanism of the reaction for generating hydrogen gas from a compound having a hydroxy group using the iron complex of formula (c) as a catalyst is presumed as shown in FIG. 3. When the iron complex of (1) in FIG. 3 is irradiated with light, the iron complex is converted from a dinuclear structure to a mononuclear structure of (2) by light energy, and a hydroxy group coordinates to the vacant coordination site to form a cyclic structure as shown in (3). Thereafter, the reaction proceeds within the cyclic structure, and an iron complex to which a hydride is coordinated is obtained as shown in (4). The hydride coordinated to the iron complex is eliminated as hydrogen gas by light energy, and the iron complex returns to (2). In this way, hydrogen gas can be obtained. Since the reaction returns to (2), the iron complex used can be reused as a catalyst and the reaction can be repeated. Therefore, hydrogen gas can be produced by a milder and simpler process. The mechanism by which hydrogen gas is generated is not limited to the above. In addition, gases other than hydrogen gas may be generated. Examples of gases other than hydrogen gas include methane and ethane, or the like.

The present disclosure has been described above with reference to several embodiments, but the present disclosure is not limited to the above embodiments.

The present disclosure includes the following embodiments.
[1] A method for producing hydrogen gas, the method comprising a step of obtaining hydrogen gas by irradiating, with light, a mixture comprising a catalyst containing a base metal component, and a substrate containing at least one selected from the group consisting of chitin, cellulose, hemicellulose, lignin, glucose, cellobiose, starch, and an alcohol.
[2] The method for producing hydrogen gas according to [1], wherein the base metal component includes at least one selected from the group consisting of divalent and trivalent metal ions.
[3] The method for producing hydrogen gas according to [2], wherein the metal ions include an iron ion.
[4] The method for producing hydrogen gas according to [3], wherein the light includes ultraviolet light.
[5] The method for producing hydrogen gas according to any one of [1] to [4], wherein the catalyst includes iron chloride.
[6] The method for producing hydrogen gas according to any one of [1] to [5], wherein the step is performed in a nitrogen atmosphere or an air atmosphere.
[7] The method for producing hydrogen gas according to [1], wherein the catalyst includes a manganese complex.
[8] The method for producing hydrogen gas according to [7], wherein the manganese complex includes at least one selected from the group consisting of the following formulas (a) and (b). 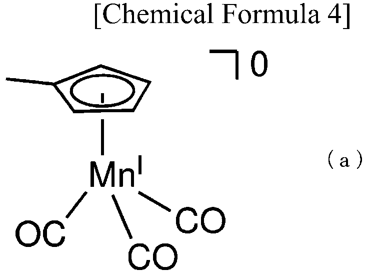 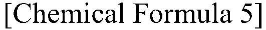 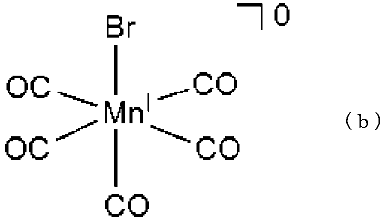
[9] The method for producing hydrogen gas according to [1], wherein the catalyst includes an iron complex.
[10] The method for producing hydrogen according to [9], wherein the mixture includes the iron complex dissolved in a polar solvent.
[11] The method for producing hydrogen gas according to any one of [7] to [10], wherein the light includes at least one selected from the group consisting of ultraviolet light and visible light.
[12] The method for producing hydrogen gas according to any one of [1] to [11], wherein the mixture includes a base.

### Examples

Hereinafter, the contents of the present disclosure will be described more specifically with reference to Examples and Reference Examples. However, the present disclosure is not limited to the following Examples.

### <Production of Hydrogen Gas Using Metal Ion as Catalyst>

### (Example 1)

Commercially available cedar wood powder was prepared as a substrate, trivalent iron chloride (manufactured by FUJIFILM Wako Pure Chemical Corporation) shown in Table 1 was prepared as a catalyst, acetonitrile was prepared as a solvent, and triethylamine was prepared as a base. In a quartz container, 1.5 mL of acetonitrile, 40 mg of cedar wood powder, and 0.26 µmol of the catalyst were added, and the catalyst was dissolved in acetonitrile. Furthermore, triethylamine was added so that the concentration was 180 mM with respect to the total amount after addition of triethylamine.

Thereafter, a stirring bar was added to the quartz container, and the inside of the quartz container was made into a nitrogen atmosphere using a glove box and sealed with a septum. While stirring vigorously at room temperature (about 20°C), the reaction between the substrate and the catalyst was started by irradiating with ultraviolet light having a wavelength range of 275 to 385 nm and a light intensity of 10 mW. An ultraviolet light irradiation device (300 W xenon light source, product name: MAX-303, manufactured by Asahi Spectra Co., Ltd.) was used for the ultraviolet light irradiation. The irradiation time, i.e., the reaction time, was 15 hours. After irradiation, the gas phase was subjected to gas chromatography (GC) to measure the amount of hydrogen gas produced. In addition, the turnover number (TON) and the turnover frequency per hour (TOF) of the catalyst were determined. The results are shown in Table 1.

### (Example 2)

Methanol was prepared as a substrate, and the same trivalent iron chloride as in Example 1 was prepared as a catalyst. Since methanol is liquid, no solvent was used in Example 2. 1.5 mL of methanol and 0.26 µmol of the catalyst were added to a quartz container. Thereafter, a stirring bar was added to the quartz container, and the inside of the quartz container was made into a nitrogen atmosphere using a glove box and sealed with a septum. While stirring vigorously at room temperature (about 20°C), the reaction between the substrate and the catalyst was started by irradiating with ultraviolet light having a wavelength range of 250 to 385 nm and a light intensity of 10 mW. An ultraviolet light irradiation device (300 W xenon light source, product name: MAX-303, manufactured by Asahi Spectra Co., Ltd.) was used for the ultraviolet light irradiation. The irradiation time, i.e., the reaction time, was 3 hours. After irradiation, the gas phase was subjected to GC to measure the amount of hydrogen gas produced. In addition, TON and TOF were determined. The results are shown in Table 1.

### (Example 3)

Except that sodium hydroxide was added as a base so that the concentration was 90 mM with respect to the total amount after addition of sodium hydroxide, the reaction was carried out in the same manner as in Example 2; the amount of hydrogen gas produced was measured, and TON and TOF were determined. The results are shown in Table 1.

### (Example 4)

Except that the reaction was carried out in an air atmosphere, the reaction was carried out in the same manner as in Example 3; the amount of hydrogen gas produced was measured, and TON and TOF were determined. The results are shown in Table 1.

### (Example 5)

Except that the concentration of sodium hydroxide was 900 mM with respect to the total amount after addition of sodium hydroxide, the reaction was carried out in the same manner as in Example 4; the amount of hydrogen gas produced was measured, and TON and TOF were determined. The results are shown in Table 1.

### (Example 6)

Except that triethylamine was used as the base and light having a wavelength range of 275 to 385 nm was used, the reaction was carried out in the same manner as in Example 3; the amount of hydrogen gas produced was measured, and TON and TOF were determined. The results are shown in Table 1.

### (Example 7)

Except that ethanol was used as the substrate, the reaction was carried out in the same manner as in Example 4; the amount of hydrogen gas produced was measured, and TON and TOF were determined. The results are shown in Table 1.

### (Example 8)

Except that divalent iron chloride (manufactured by FUJIFILM Wako Pure Chemical Corporation) shown in Table 1 was used as the catalyst and the concentration of sodium hydroxide was 250 mM with respect to the total amount after addition of sodium hydroxide, the reaction was carried out in the same manner as in Example 4. The amount of hydrogen gas produced was measured, and TON and TOF were determined. The results are shown in Table 1.

### (Example 9)

Except that trivalent iron nitrate (manufactured by FUJIFILM Wako Pure Chemical Corporation) shown in Table 1 was used as the catalyst and the amount of the catalyst was 0.026 µmol, the reaction was carried out in the same manner as in Example 8. The amount of hydrogen gas produced was measured, and TON and TOF were determined. The results are shown in Table 1.

### (Example 10)

Except that trivalent iron sulfate (manufactured by FUJIFILM Wako Pure Chemical Corporation) shown in Table 1 was used as the catalyst and the amount of the catalyst was 0.013 µmol, the reaction was carried out in the same manner as in Example 8. The amount of hydrogen gas produced was measured, and TON and TOF were determined. The results are shown in Table 1.

### (Example 11)

Except that divalent iron sulfate (manufactured by FUJIFILM Wako Pure Chemical Corporation) shown in Table 1 was used as the catalyst and the amount of the catalyst was 0.026 µmol, the reaction was carried out in the same manner as in Example 8. The amount of hydrogen gas produced was measured, and TON and TOF were determined. The results are shown in Table 1.

### (Reference Example 1)

100 mg of kraft lignin (manufactured by Nippon Paper Industries Co., Ltd.) was prepared as a substrate, and an iron compound (manufactured by FUJIFILM Wako Pure Chemical Corporation) shown in Table 2 was prepared as a catalyst. The catalyst was dissolved in 3 g of water so that the amount of catalyst per 100 mg of substrate was 0.04 mmol, and a catalyst aqueous solution was prepared. 100 mg of the substrate was added to the prepared catalyst aqueous solution to prepare a test sample. The test sample was vigorously stirred at room temperature (about 20°C) using a stirrer, and the reaction between the substrate and the catalyst was started by irradiating with visible light having a wavelength range of 385 to 740 nm and a light intensity of 200 mW. A visible light irradiation device (300 W xenon light source, product name: MAX-303, manufactured by Asahi Spectra Co., Ltd.) was used for the visible light irradiation. The irradiation time, i.e., the reaction time, was 18 hours. The reaction conditions are shown in Table 2.

After the reaction, the test sample was subjected to vacuum distillation, and the low boiling point compounds separated from the test sample were measured by GC-MS to qualitatively and quantitatively determine methanol. The peak area of the obtained methanol was converted using a previously prepared calibration curve, and the amount of methanol produced was calculated. The amount of methanol produced is shown in Table 2.

### (Reference Example 2)

Except that the iron compound shown in Table 2 (manufactured by FUJIFILM Wako Pure Chemical Corporation) was used as the catalyst, the reaction was carried out in the same manner as in Reference Example 1, and the amount of methanol produced was measured. The results are shown in Table 2.

### (Reference Example 3)

Except that the iron compound shown in Table 2 (manufactured by FUJIFILM Wako Pure Chemical Corporation) was used as the catalyst, the reaction was carried out in the same manner as in Reference Example 1, and the amount of methanol produced was measured. The results are shown in Table 2.

### (Reference Example 4)

Except that the iron compound shown in Table 2 was used as the catalyst and the reaction was carried out with 0.02 mmol of the catalyst per 100 mg of the substrate, the reaction was carried out in the same manner as in Reference Example 1, and the amount of methanol produced was measured. The results are shown in Table 2.

### (Reference Example 5)

Except that the iron compound shown in Table 2 was used as the catalyst and the reaction was carried out with 0.10 mmol of the catalyst per 100 mg of the substrate, the reaction was carried out in the same manner as in Reference Example 1, and the amount of methanol produced was measured. The results are shown in Table 2.

### (Reference Example 6)

Except that the iron compound shown in Table 2 was used as the catalyst, the amount of substrate used was 50 mg, and the reaction was carried out with 0.04 mmol of the catalyst per 50 mg of the substrate, the reaction was carried out in the same manner as in Reference Example 1, and the amount of methanol produced was measured. The results are shown in Table 2.

### (Reference Example 7)

Except that sodium lignosulfonate (manufactured by Sigma-Aldrich Co., LLC) was used as the substrate and the iron compound shown in Table 2 was used as the catalyst, the reaction was carried out in the same manner as in Reference Example 1, and the amount of methanol produced was measured. The results are shown in Table 2.

### (Reference Example 8)

Except that commercially available cedar wood powder was used as the substrate, the iron compound shown in Table 2 was used as the catalyst, and the amount of substrate used was 50 mg, the reaction was carried out in the same manner as in Reference Example 1, and the amount of methanol produced was measured. The results are shown in Table 2.

### (Reference Example 9)

Except that wood powder recovered from waste was used as the substrate and the iron compound shown in Table 2 was used as the catalyst, the reaction was carried out in the same manner as in Reference Example 1, and the amount of methanol produced was measured. The results are shown in Table 2.

### (Reference Example 10)

Except that the manganese compound shown in Table 2 (manufactured by Sigma-Aldrich Co., LLC) was used as the catalyst, the reaction was carried out in the same manner as in Reference Example 1, and the amount of methanol produced was measured. The results are shown in Table 2.

**[Table 1]**

| | Catalyst | Substrate | Base | Measurement atmosphere | Amount of catalyst (µmol) | Amount of hydrogen gas produced (µmol) | TON | TOF |
|---|---|---|---|---|---|---|---|---|
| Example 1 | Fe^{III}Cl₃·6H₂O | Cedar wood powder | Triethylamine (180mM) | Nitrogen | 0.26 | 0.49 | 1.9 | 0.13 |
| Example 2 | | Methanol | - | Nitrogen | 0.26 | 0.31 | 1.2 | 0.40 |
| Example 3 | | | Sodium hydroxide (90mM) | | | 8.8 | 34 | 11.0 |
| Example 4 | | | | Air | | 11 | 44 | 15.0 |
| Example 5 | | | Sodium hydroxide (900mM) | | | 17 | 67 | 22.3 |
| Example 6 | | | Triethylamine (90mM) | Nitrogen | | 1.8 | 6.9 | 2.30 |
| Example 7 | | Ethanol | Sodium hydroxide (90mM) | Air | | 7.9 | 30 | 10.0 |
| Example 8 | Fe^{II}Cl₂·4H₂O | Methanol | Sodium hydroxide (250mM) | | | 14 | 52 | 17.3 |
| Example 9 | Fe^{III}(NO₃)₃·9H₂O | | | | 0.026 | 4.4 | 169 | 56.0 |
| Example 10 | Fe^{III}₂(SO₄)₃·nH₂O | | | | 0.013 | 4.3 | 167 | 56.0 |
| Example 11 | Fe^{II}SO₄·7H₂O | | | | 0.026 | 3.3 | 127 | 42.0 |

**[Table 2]**

| | Substrate | Amount of substrate (mg) | Catalyst | Amount of catalyst (mmol) | Amount of methanol produced (mM) |
|---|---|---|---|---|---|
| Reference Example 1 | Kraft lignin | 100 | Fe^{III}(NO₃)₃·9H₂O | 0.04 | 1.74 |
| Reference Example 2 | | | Fe^{III}Cl₃·6H₂O | 0.04 | 1.85 |
| Reference Example 3 | | | Fe^{III}₂(SO₄)₃·nH₂O | 0.04 | 4.16 |
| Reference Example 4 | | | | 0.02 | 2.74 |
| Reference Example 5 | | | | 0.10 | 7.81 |
| Reference Example 6 | | 50 | | 0.04 | 5.35 |
| Reference Example 7 | Sodium lignosulfonate | 100 | Fe^{III}₂(SO₄)₃·nH₂O | 0.04 | 1.38 |
| Reference Example 8 | Cedar wood powder | 100 | Fe^{III}Cl₃·6H₂O | 0.04 | 0.138 |
| Reference Example 9 | Wood powder | 100 | Fe^{III}₂(SO₄)₃·nH₂O | 0.04 | 0.363 |
| Reference Example 10 | Kraft lignin | 100 | Mn^{II}(NO₃)₂·nH₂O | 0.04 | 1.08 |

As shown in Table 1, it was confirmed that hydrogen gas was generated from cedar wood powder, methanol, and alcohol by using a metal compound containing divalent or trivalent metal ions as a catalyst and irradiating with ultraviolet light. It was confirmed that this reaction proceeds in either a nitrogen or air atmosphere, and that the addition of a base promotes the reaction and increases the amount of hydrogen gas produced.

As shown in Reference Examples 1 to 10 in Table 2, it was confirmed that methanol was produced when biomass resources such as kraft lignin and a metal compound were reacted by irradiating with visible light. In this way, polymers of biomass resources such as lignin produce methanol by irradiation with visible light and a catalyst containing a base metal component. In Example 1, it is considered that hydrogen gas was generated by the reaction of hydroxy groups contained in polymers such as lignin contained in cedar wood powder by irradiation with ultraviolet light and a metal compound catalyst. Therefore, it is considered that hydrogen gas would also be generated in Reference Examples 1 to 10 in the same manner as in Example 1 if ultraviolet light is used.

### <Production of Hydrogen Gas Using Manganese Complex as Catalyst>

### (Example 12)

101 mg of chitin (manufactured by FUJIFILM Wako Pure Chemical Corporation) was prepared as a substrate, and a manganese complex (manufactured by Sigma-Aldrich Co., LLC) shown in the following formula (a) was prepared as a catalyst. The amount of substance of 101 mg of chitin was 0.5 mmol when converted to N-acetyl-D-glucosamine, which is a monomer. 75 µmol of the manganese complex was added to a quartz container. Thereafter, a stirring bar was added to the quartz container, and the inside of the quartz container was made into a nitrogen atmosphere using a glove box and sealed with a septum. While stirring vigorously at room temperature (about 20°C), the reaction between the substrate and the catalyst was started by irradiating with ultraviolet light having a wavelength range of 300 to 385 nm and a light intensity of 50 mW. An ultraviolet light irradiation device (300 W xenon light source, product name: MAX-303, manufactured by Asahi Spectra Co., Ltd.) was used for the ultraviolet light irradiation. The irradiation time, i.e., the reaction time, was 2 hours. After irradiation, the gas phase was subjected to GC to measure the amount of hydrogen gas produced. In addition, TON and TOF were determined. The results are shown in Table 3.

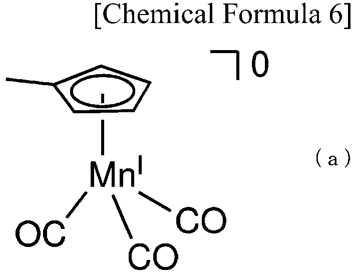

### (Example 13)

Except that the light to be irradiated was visible light having a wavelength range of 385 to 740 nm and a light intensity of 200 mW, the reaction was carried out in the same manner as in Example 12. The amount of hydrogen gas produced was measured, and TON and TOF were determined. A visible light irradiation device (300 W xenon light source, product name: MAX-303, manufactured by Asahi Spectra Co., Ltd.) was used for the visible light irradiation. The results are shown in Table 3.

### (Example 14)

Except that 101 mg of snow crab shell was used as the substrate, the reaction was carried out in the same manner as in Example 12. The amount of hydrogen gas produced was measured, and TON and TOF were determined. The results are shown in Table 3.

### (Example 15)

Except that 101 mg of red king crab shell was used as the substrate, the reaction was carried out in the same manner as in Example 12. The amount of hydrogen gas produced was measured, and TON and TOF were determined. The results are shown in Table 3.

### (Example 16)

Except that cyclohexanemethanol was used as the substrate and the amount of the substrate was 61 µL (0.5 mol), the reaction was carried out in the same manner as in Example 12. The amount of hydrogen gas produced was measured, and TON and TOF were determined. The results are shown in Table 3.

### (Example 17)

Except that 81 mg of cellulose (manufactured by FUJIFILM Wako Pure Chemical Corporation) was used as the substrate, the reaction was carried out in the same manner as in Example 12. The amount of hydrogen gas produced was measured, and TON and TOF were determined. The results are shown in Table 3. The amount of substance of 81 mg of cellulose was 0.5 mmol when converted to glucose, which is a monomer.

### (Example 18)

Except that 101 mg of kraft lignin (manufactured by Nippon Paper Industries Co., Ltd.) was used as the substrate, the reaction was carried out in the same manner as in Example 12. The amount of hydrogen gas produced was measured, and TON and TOF were determined. The results are shown in Table 3.

### (Example 19)

Except that 101 mg of commercially available cedar wood powder was used as the substrate, the reaction was carried out in the same manner as in Example 12. The amount of hydrogen gas produced was measured, and TON and TOF were determined. The results are shown in Table 3.

### (Example 20)

Except that the manganese complex shown in the following formula (b) (manufactured by Sigma-Aldrich Co., LLC) was used as the catalyst, the reaction was carried out in the same manner as in Example 12. The amount of hydrogen gas produced was measured, and TON and TOF were determined. The results are shown in Table 3.

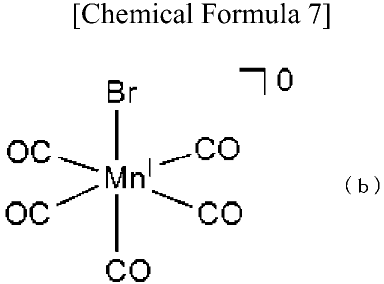

**[Table 3]**

| | Substrate | Light | Amount of hydrogen gas produced (µmol) | TON | TOF |
|---|---|---|---|---|---|
| Example 12 | Chitin | Ultraviolet light | 7.80 | 0.104 | 0.052 |
| Example 13 | | Visible Light | 4.95 | 0.066 | 0.033 |
| Example 14 | Snow crab shell | Ultraviolet light | 3.04 | 0.040 | 0.020 |
| Example 15 | Red king crab shell | | 7.05 | 0.090 | 0.045 |
| Example 16 | Cyclohexanemethanol | | 4.37 | 0.058 | 0.027 |
| Example 17 | Cellulose | | 3.66 | 0.049 | 0.025 |
| Example 18 | Kraft lignin | | 0.89 | 0.012 | 0.006 |
| Example 19 | Cedar wood powder | | 4.80 | 0.064 | 0.032 |
| Example 20 | Chitin | | 0.66 | 0.008 | 0.004 |

As shown in Table 3, it was confirmed that hydrogen gas can be generated from polymers derived from biomass resources and alcohols by irradiating with light when the catalyst is a manganese complex.

### <Production of Hydrogen Gas Using Iron Complex as Catalyst>

### (Example 21)

Commercially available cedar wood powder was prepared as a substrate, an iron complex (manufactured by FUJIFILM Wako Pure Chemical Corporation) shown in the following formula (c) was prepared as a catalyst, acetonitrile was prepared as a solvent, and triethylamine was prepared as a base. In a quartz container, 1.5 mL of acetonitrile, 40 mg of cedar wood powder, and 0.21 µmol of the catalyst were added, and the catalyst was dissolved in acetonitrile. Furthermore, triethylamine was added so that the concentration was 90 mM with respect to the total amount after addition of triethylamine.

Thereafter, a stirring bar was added to the quartz container, and the inside of the quartz container was made into a nitrogen atmosphere using a glove box and sealed with a septum. While stirring vigorously at room temperature (about 20°C), the reaction between the substrate and the catalyst was started by irradiating with ultraviolet light having a wavelength range of 300 to 385 nm and a light intensity of 10 mW. An ultraviolet light irradiation device (300 W xenon light source, product name: MAX-303, manufactured by Asahi Spectra Co., Ltd.) was used for the ultraviolet light irradiation. The irradiation time, i.e., the reaction time, was 15 hours. After irradiation, the gas phase was subjected to GC to measure the amount of hydrogen gas produced. In addition, TON and TOF were determined. The results are shown in Table 4.

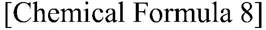

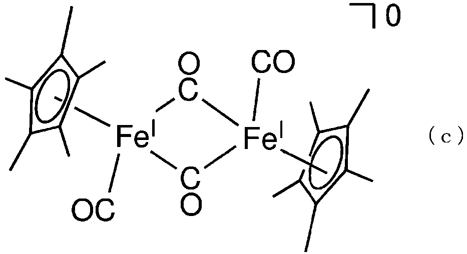

### (Example 22)

Except that 40 mg of kraft lignin (manufactured by Nippon Paper Industries Co., Ltd.) was used as the substrate, the reaction was carried out in the same manner as in Example 21. The amount of hydrogen gas produced was measured, and TON and TOF were determined. The results are shown in Table 4.

### (Example 23)

Methanol was prepared as a substrate, and the iron complex (manufactured by FUJIFILM Wako Pure Chemical Corporation) used in Example 21 was prepared as a catalyst. Since methanol is liquid, no solvent was used. 1.5 mL of methanol was added to a quartz container, and 0.051 µmol of the catalyst was dissolved. Thereafter, a stirring bar was added to the quartz container, and the inside of the quartz container was made into a nitrogen atmosphere using a glove box and sealed with a septum. While stirring vigorously at room temperature (about 20°C), the reaction between the substrate and the catalyst was started by irradiating with ultraviolet light having a wavelength range of 300 to 385 nm and a light intensity of 10 mW. An ultraviolet light irradiation device (300 W xenon light source, product name: MAX-303, manufactured by Asahi Spectra Co., Ltd.) was used for the ultraviolet light irradiation. The irradiation time, i.e., the reaction time, was 3 hours. After irradiation, the gas phase was subjected to GC to measure the amount of hydrogen gas produced. In addition, TON and TOF were determined. The results are shown in Table 4.

### (Example 24)

Except that sodium hydroxide was added as a base so that the concentration was 90 mM with respect to the total amount after addition of sodium hydroxide, the reaction was carried out in the same manner as in Example 23. The amount of hydrogen gas produced was measured, and TON and TOF were determined. The results are shown in Table 4.

### (Example 25)

Except that the light to be irradiated was visible light having a wavelength range of 385 to 740 nm and a light intensity of 100 mW, the reaction was carried out in the same manner as in Example 23. A visible light irradiation device (300 W xenon light source, product name: MAX-303, manufactured by Asahi Spectra Co., Ltd.) was used for the visible light irradiation. The amount of hydrogen gas produced was measured, and TON and TOF were determined. The results are shown in Table 4.

### (Example 26)

Except that the light to be irradiated was sunlight, the reaction was carried out in the same manner as in Example 23. The reaction was carried out by irradiating with natural sunlight at the Environment Control Center for Experimental Biology of Kyushu University. The amount of hydrogen gas produced was measured, and TON and TOF were determined. The results are shown in Table 4.

### (Example 27)

Except that triethylamine was used as the base, the reaction was carried out in the same manner as in Example 24. The amount of hydrogen gas produced was measured, and TON and TOF were determined. The results are shown in Table 4.

### (Example 28)

Except that ethanol was used as the substrate, the reaction was carried out in the same manner as in Example 27. The amount of hydrogen gas produced was measured, and TON and TOF were determined. The results are shown in Table 4.

**[Table 4]**

| | Substrate | Base | Light | Amount of hydrogen gas produced (µmol) | TON | TOF |
|---|---|---|---|---|---|---|
| Example 21 | Cedar wood powder | Triethylamine | Ultraviol et light | 0.044 | 0.10 | 0.0067 |
| Example 22 | Kraft lignin | | | 0.031 | 0.069 | 0.0046 |
| Example 23 | Methanol | - | | 0.12 | 1.2 | 0.40 |
| Example 24 | | Sodium hydroxide | | 1.5 | 15 | 5.0 |
| Example 25 | | | Visible light | 0.55 | 5.4 | 1.8 |
| Example 26 | | | Sunlight | 0.17 | 1.7 | 0.57 |
| Example 27 | | Triethylamine | Ultraviol et light | 0.57 | 5.6 | 1.9 |
| Example 28 | Ethanol | | | 0.26 | 2.5 | 0.83 |

It was confirmed that hydrogen gas can be generated from cedar wood powder, kraft lignin, methanol, and ethanol by irradiating with light even when an iron complex is used as the catalyst. It was also confirmed that the reaction is promoted by the addition of a base.

### [Confirmation of Formaldehyde Generation]

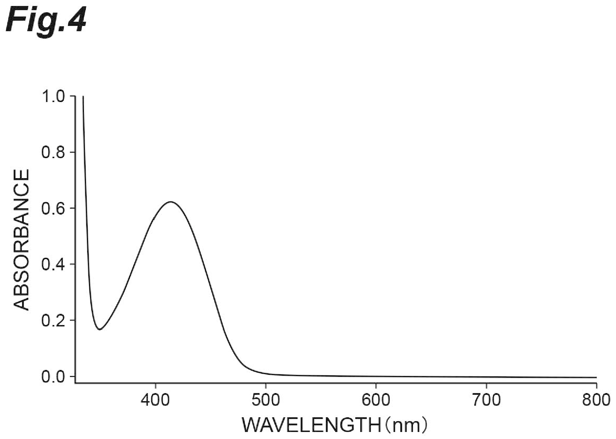

In order to confirm the mechanism by which hydrogen gas is generated when methanol is used as the substrate, formaldehyde contained in the solution after the reaction was detected. Formaldehyde was detected by the acetylacetone method described in Nash, T. The colorimetric estimation offormaldehyde by means of the Hantzsch reaction. Biochem. J. 1953, 55(3), 416-421. Specifically, 0.8 mL of a 2.26 M acetic acid aqueous solution and 20 mL of a 2.25 M ammonium acetate aqueous solution were mixed to prepare an acetic acid-ammonium acetate buffer solution. In addition, 0.35 mL of acetylacetone and 0.7 mL of ethanol were added with water to prepare 50 mL of an acetylacetone solution. In the reaction in which iron chloride or the iron complex of formula (c) was used as the catalyst and methanol was used as the substrate, 2 mL of the acetic acid-ammonium acetate buffer solution and 2 mL of the acetylacetone solution were added to 0.1 mL of a solution obtained by diluting the solution after the reaction 10 times with water. Thereafter, after heating at 60°C for 15 minutes, the temperature was lowered to room temperature, and the absorption spectrum was measured. FIG. 4 shows the detection result of formaldehyde in Example 5. As shown in FIG. 4, since an absorption band at 410 nm was observed, the generation of formaldehyde was confirmed.

Since formaldehyde was generated after the reaction, it is considered that the reaction in which the hydroxy group of the substrate is oxidized to an aldehyde group is promoted by the catalyst and light, and hydrogen gas is generated along with this reaction.

### (Example 29)

1-Propanol was prepared as a substrate, and the same trivalent iron chloride as in Example 1 was prepared as a catalyst. Since 1-propanol is liquid, no solvent was used in Example 29. In a quartz container, 1.5 mL of 1-propanol, 0.0026 µmol of the catalyst, and sodium hydroxide as a base were added so that the concentration was 250 mM with respect to the total amount after addition of sodium hydroxide. Thereafter, a stirring bar was added to the quartz container, and the container was sealed with a septum in an air atmosphere. While stirring vigorously at room temperature (about 20°C), the reaction between the substrate and the catalyst was started by irradiating with ultraviolet light having a wavelength range of 250 to 385 nm and a light intensity of 10 mW. An ultraviolet light irradiation device (300 W xenon light source, product name: MAX-303, manufactured by Asahi Spectra Co., Ltd.) was used for the ultraviolet light irradiation. The irradiation time, i.e., the reaction time, was 3 hours. After irradiation, the gas phase was subjected to GC to measure the amount of hydrogen gas produced. In addition, TON and TOF were determined. The results are shown in Table 5.

### (Example 30)

Except that 2-propanol was used as the substrate, the reaction was carried out in the same manner as in Example 29, the amount of hydrogen gas produced was measured, and TON and TOF were determined. The results are shown in Table 5.

**[Table 5]**

| | Catalyst | Substrate | Base | Measurement atmosphere | Amount of catalyst (µmol) | Amount of hydrogen gas produced (µmol) | TON | TOF |
|---|---|---|---|---|---|---|---|---|
| Example 29 | Fe^{III}Cl₃·6H₂O | 1-propanol | Sodium hydroxide (250mM) | Nitrogen | 0.0026 | 0.85 | 33 | 11.0 |
| Example 30 | | 2-propanol | | | | 0.19 | 7.3 | 2.43 |

### <Production of Hydrogen Gas Using Water as Solvent>

### (Example 31)

Methanol was prepared as a substrate, the same divalent iron chloride as in Example 8 was prepared as a catalyst, and water was prepared as a solvent. In a quartz container, 0.54 mL of methanol, 0.96 mL of water, and 0.26 µmol of the catalyst were added, and the methanol and the catalyst were dissolved in water. Thereafter, a stirring bar was added to the quartz container, and the container was sealed with a septum in an air atmosphere. While stirring vigorously at room temperature (about 20°C), the reaction between the substrate and the catalyst was started by irradiating with ultraviolet light having a wavelength range of 250 to 385 nm and a light intensity of 10 mW. An ultraviolet light irradiation device (300 W xenon light source, product name: MAX-303, manufactured by Asahi Spectra Co., Ltd.) was used for the ultraviolet light irradiation. The irradiation time, i.e., the reaction time, was 3 hours. After irradiation, the gas phase was subjected to GC to measure the amount of hydrogen gas produced. In addition, TON and TOF were determined. The results are shown in Table 6.

### (Example 32)

Except that ethanol was used as the substrate, the reaction was carried out in the same manner as in Example 31, the amount of hydrogen gas produced was measured, and TON and TOF were determined. The results are shown in Table 6. In Example 32, methane was detected in the gas phase in addition to hydrogen gas. The amount of methane produced was 0.57 µmol, and the TON and TOF of the catalyst in methane production were 2.19 and 0.73, respectively.

### (Example 33)

Except that 1-propanol was used as the substrate, the reaction was carried out in the same manner as in Example 31, the amount of hydrogen gas produced was measured, and TON and TOF were determined. The results are shown in Table 6. In Example 33, ethane was detected in the gas phase in addition to hydrogen gas. The amount of ethane produced was 0.86 µmol, and the TON and TOF of the catalyst in ethane production were 3.30 and 1.1, respectively.

### (Example 34)

Except that 2-propanol was used as the substrate, the amount of the substrate was 0.3 mL, and the amount of the solvent (water) was 1.2 mL, the reaction was carried out in the same manner as in Example 31, the amount of hydrogen gas produced was measured, and TON and TOF were determined. The results are shown in Table 6.

### (Example 35)

Except that glucose was used as the substrate and glucose was dissolved in 1.5 mL of the solvent (water) so that the concentration was 100 mM, the reaction was carried out in the same manner as in Example 31, the amount of hydrogen gas produced was measured, and TON and TOF were determined. The results are shown in Table 6.

### (Example 36)

Except that divalent copper chloride (manufactured by FUJIFILM Wako Pure Chemical Corporation) shown in Table 6 was used as the catalyst, the reaction was carried out in the same manner as in Example 31, the amount of hydrogen gas produced was measured, and TON and TOF were determined. The results are shown in Table 6.

### (Example 37)

Except that divalent nickel chloride (manufactured by FUJIFILM Wako Pure Chemical Corporation) shown in Table 6 was used as the catalyst, the reaction was carried out in the same manner as in Example 31, the amount of hydrogen gas produced was measured, and TON and TOF were determined. The results are shown in Table 6.

### (Example 38)

Except that divalent zinc chloride (manufactured by FUJIFILM Wako Pure Chemical Corporation) shown in Table 6 was used as the catalyst, the reaction was carried out in the same manner as in Example 31, the amount of hydrogen gas produced was measured, and TON and TOF were determined. The results are shown in Table 6.

### (Example 39)

Except that divalent manganese chloride (manufactured by FUJIFILM Wako Pure Chemical Corporation) shown in Table 6 was used as the catalyst, the reaction was carried out in the same manner as in Example 31, the amount of hydrogen gas produced was measured, and TON and TOF were determined. The results are shown in Table 6.

### (Example 40)

Cellobiose was prepared as a substrate, the same trivalent iron chloride as in Example 1 was prepared as a catalyst, and water was prepared as a solvent. In a quartz container, 10 mg of cellobiose, 1.5 mL of water, and 2.6 µmol of the catalyst were added, and the catalyst was dissolved in water. Cellobiose did not dissolve in water. Thereafter, a stirring bar was added to the quartz container, and the container was sealed with a septum in an air atmosphere. While stirring vigorously at room temperature (about 20°C), the reaction between the substrate and the catalyst was started by irradiating with ultraviolet light having a wavelength range of 250 to 385 nm and a light intensity of 10 mW. An ultraviolet light irradiation device (300 W xenon light source, product name: MAX-303, manufactured by Asahi Spectra Co., Ltd.) was used for the ultraviolet light irradiation. The irradiation time, i.e., the reaction time, was 3 hours. After irradiation, the gas phase was subjected to GC to measure the amount of hydrogen gas produced. In addition, TON and TOF were determined. The results are shown in Table 6.

### (Example 41)

Except that starch was used as the substrate, the reaction was carried out in the same manner as in Example 40, the amount of hydrogen gas produced was measured, and TON and TOF were determined. The results are shown in Table 6.

### (Example 42)

Except that cellulose was used as the substrate, the reaction was carried out in the same manner as in Example 40, the amount of hydrogen gas produced was measured, and TON and TOF were determined. The results are shown in Table 6.

### (Example 43)

Except that chitin was used as the substrate and the reaction time was 16 hours, the reaction was carried out in the same manner as in Example 40, the amount of hydrogen gas produced was measured, and TON and TOF were determined. The results are shown in Table 6.

### (Example 44)

Except that chitin was used as the substrate, divalent copper sulfate (manufactured by FUJIFILM Wako Pure Chemical Corporation) shown in Table 6 was used as the catalyst, and the reaction time was 16 hours, the reaction was carried out in the same manner as in Example 40, the amount of hydrogen gas produced was measured, and TON and TOF were determined. The results are shown in Table 6.

**[Table 6]**

| | Catalyst | Substrate | Amount of substrate | Amount of water (mL) | Amount of catalyst (µmol) | Reaction time (hour) | Amount of hydrogen gas produced (µmol) | TON | TOF |
|---|---|---|---|---|---|---|---|---|---|
| Example 31 | Fe^{II}Cl₂·4H₂O | Methanol | 0.54mL | 0.96 | 0.26 | 3 | 2.9 | 11.3 | 3.77 |
| Example 32 | | Ethanol | | | | | 0.63 | 2.43 | 0.81 |
| Example 33 | | 1-propanol | | | | | 0.85 | 3.27 | 1.09 |
| Example 34 | | 2-propanol | 0.3mL | 1.2 | | | 0.07 | 0.28 | 0.09 |
| Example 35 | | Glucose | 100mM | 1.5 | | | 0.24 | 0.92 | 0.31 |
| Example 36 | Cu^{II}Cl₂·2H₂O | Methanol | 0.54mL | 0.96 | | | 0.06 | 0.25 | 0.08 |
| Example 37 | Ni^{II}Cl₂·6H₂O | | | | | | 0.85 | 3.27 | 1.09 |
| Example 38 | Zn^{II}Cl₂·6H₂O | | | | | | 0.07 | 0.28 | 0.09 |
| Example 39 | Mn^{II}Cl₂·4H₂O | | | | | | 0.24 | 0.92 | 0.31 |
| Example 40 | Fe^{III}Cl₃·6H₂O | Cellobiose | 10mg | 1.5 | 2.6 | | 1.53 | 0.59 | 0.20 |
| Example 41 | | Starch | | | | | 0.5 | 0.19 | 0.063 |
| Example 42 | | Cellulose | | | | | 0.03 | 0.01 | 0.003 |
| Example 43 | | Chitin | | | | 16 | 0.02 | 0.01 | 0.0006 |
| Example 44 | Cu^{II}SO₄·5H₂O | | | | | | 0.03 | 0.01 | 0.0006 |

### <Examination of Pretreatment>

### (Example 44)

Cellulose was prepared as a substrate, the same trivalent iron chloride as in Example 1 was prepared as a catalyst, and water was prepared as a solvent. In a quartz container, 10 mg of cellulose, 1.5 mL of water, and 2.6 µmol of the catalyst were added, and the catalyst was dissolved in water. Cellulose did not dissolve in water. Thereafter, a stirring bar was added to the quartz container, and the container was sealed with a septum in an air atmosphere and heated at 150°C for 4 hours for pretreatment. After the pretreatment, while stirring vigorously at room temperature (about 20°C), the reaction between the substrate and the catalyst was started by irradiating with ultraviolet light having a wavelength range of 250 to 385 nm and a light intensity of 10 mW. An ultraviolet light irradiation device (300 W xenon light source, product name: MAX-303, manufactured by Asahi Spectra Co., Ltd.) was used for the ultraviolet light irradiation. The irradiation time, i.e., the reaction time, was 16 hours. After irradiation, the gas phase was subjected to GC to measure the amount of hydrogen gas produced. In addition, TON and TOF were determined. As a result, the amount of hydrogen gas produced was 0.61 µmol, TON was 0.23, and TOF was 0.014.

### (Example 45)

Cellulose and 2-propanol were prepared as substrates, the same trivalent iron chloride as in Example 1 was prepared as a catalyst, and water was prepared as a solvent. In a quartz container, 10 mg of cellulose, 2.1 µL of 2-propanol, 1.5 mL of water, and 2.6 µmol of the catalyst were added, and the catalyst and 2-propanol were dissolved in water. Thereafter, without performing pretreatment, the reaction was carried out in the same manner as in Example 44, the amount of hydrogen gas produced was measured, and TON and TOF were determined. As a result, the amount of hydrogen gas produced was 0.7 µmol, TON was 0.27, and TOF was 0.056.

### (Example 46)

Cellulose and 2-propanol were prepared as substrates, the same trivalent iron chloride as in Example 1 was prepared as a catalyst, and water was prepared as a solvent. In a quartz container, 10 mg of cellulose, 2.1 µL of 2-propanol, 1.5 mL of water, and 2.6 µmol of the catalyst were added, and the catalyst and 2-propanol were dissolved in water. Thereafter, the pretreatment and reaction were carried out in the same manner as in Example 44, the amount of hydrogen gas produced was measured, and TON and TOF were determined. As a result, the amount of hydrogen gas produced was 1.48 µmol, TON was 0.57, and TOF was 0.036. From the comparison with Example 45, it was confirmed that the amount of hydrogen gas produced increased by performing the pretreatment.

### Industrial Applicability

According to the present disclosure, the present disclosure can provide a method for producing hydrogen gas that enables hydrogen gas to be generated from readily available raw materials by a mild and simple process using a catalyst containing a base metal component.

## Claims

1. A method for producing hydrogen gas, the method comprising a step of obtaining hydrogen gas by irradiating, with light, a mixture comprising a catalyst containing a base metal component, and a substrate containing at least one selected from the group consisting of chitin, cellulose, hemicellulose, lignin, glucose, cellobiose, starch, and an alcohol.

2. The method for producing hydrogen gas according to claim 1, wherein the base metal component includes at least one selected from the group consisting of divalent and trivalent metal ions.

3. The method for producing hydrogen gas according to claim 2, wherein the metal ions include an iron ion.

4. The method for producing hydrogen gas according to claim 3, wherein the light includes ultraviolet light.

5. The method for producing hydrogen gas according to any one of claims 1 to 4, wherein the catalyst includes iron chloride.

6. The method for producing hydrogen gas according to any one of claims 1 to 4, wherein the step is performed in a nitrogen atmosphere or an air atmosphere.

7. The method for producing hydrogen gas according to claim 1, wherein the catalyst includes a manganese complex.

8. The method for producing hydrogen gas according to claim 7, wherein the manganese complex includes at least one selected from the group consisting of the following formulas (a) and (b):

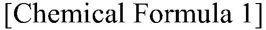

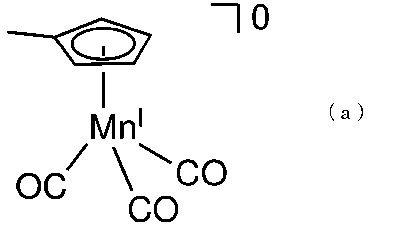

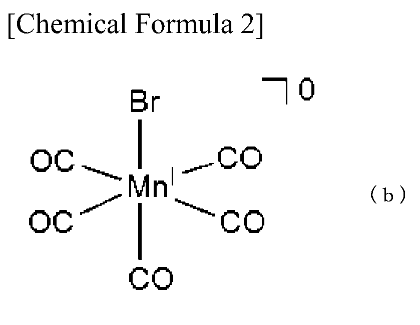

9. The method for producing hydrogen gas according to claim 1, wherein the catalyst includes an iron complex.

10. The method for producing hydrogen gas according to claim 9, wherein the mixture includes the iron complex dissolved in a polar solvent.

11. The method for producing hydrogen gas according to any one of claims 7 to 10, wherein the light includes at least one selected from the group consisting of ultraviolet light and visible light.

12. The method for producing hydrogen gas according to claim 1 or 2, wherein the mixture includes a base.
